# EUROPÄISCHE PATENTSCHRIFT

(11) **EP 2 493 679 B1**
(45) Veröffentlichungstag und Bekanntmachung des Hinweises auf die Patenterteilung: **24.04.2019**
(21) Anmeldenummer: 10768409.4
(22) Anmeldetag: 08.10.2010
(51) Int. Cl.: B29C 73/10, B29C 65/48, B29L 30/00

(54) **REPARATURPFLASTER FÜR EIN ELASTOMERES BAUTEIL, INSBESONDERE FÜR EINEN FAHRZEUGREIFEN, MIT ERHÖHTER KLEBEFESTIGKEIT**
REPAIR PATCH FOR AN ELASTOMER COMPONENT, IN PARTICULAR FOR A VEHICLE TIRE, HAVING INCREASED ADHESIVE STRENGTH
ADHÉSIF DE RÉPARATION POUR ÉLÉMENT ÉLASTOMÈRE, EN PARTICULIER POUR PNEUMATIQUE DE VÉHICULE, AYANT UN POUVOIR ADHÉSIF ACCRU

(30) Priorität: 27.10.2009 DE 102009050899
(43) Veröffentlichungstag der Anmeldung: 05.09.2012
(73) Patentinhaber: Rema Tip Top AG, 85586 Poing (DE)
(72) Erfinder: CASPER, Christian, 85229 Mark Indersdorf (DE); RAUCH, Christian, 81927 München (DE); SCHEUNGRABER, Patric, 85652 Pliening (DE)
(74) Vertreter: MERH-IP Matias Erny Reichl Hoffmann Patentanwälte PartG mbB
(86) Internationale Anmeldenummer: PCT/EP2010/006171
(87) Internationale Veröffentlichungsnummer: WO 2011/054431

(56) Entgegenhaltungen:
- EP-A1- 1 864 786
- WO-A1-2008/147413
- WO-A1-2009/061324
- DE-B- 1 129 279
- DE-U1- 29 610 697
- US-A- 1 591 817
- US-A- 5 695 577

## Beschreibung

Die vorliegende Erfindung betrifft ein Reparaturpflaster für ein elastomeres Bauteil, insbesondere für einen Fahrzeugreifen, und ein Verfahren zur Reparatur des elastomeren Bauteils mit dem Reparaturpflaster, das ohne die Verwendung eines zusätzlichen Klebstoffs eine erhöhte Konfektionsklebrigkeit vor der Vulkanisation des Reparaturpflasters aufweist. Zudem weist die Verbindung des Reparaturpflasters mit dem elastomeren Bauteil nach der Vulkanisation eine verbesserte Festigkeit auf.

Die Reparatur eines beschädigten Fahrzeugreifens wird bei kleineren Stichverletzungen im Laufflächenbereich mittels eines sogenannten Kombireparaturkörpers durchgeführt, während bei größeren Schäden im Laufflächen- oder Seitenwandbereich nach Ausarbeitung der Schadenstelle der dabei entstehende sogenannte Trichter mit Rohgummi verfüllt wird und die im Schadensbereich unterbrochenen Festigkeitsträger mittels eines Reparaturpflasters, welches seinerseits entsprechende Festigkeitsträger enthält, überbrückt werden. Da der Kraftfluss in den Festigkeitsträgern von Fahrzeugreifen und Reparaturpflastern über die dazwischen liegenden Gummischichten übertragen werden muss, werden insbesondere an die Verbindungsschicht zwischen Fahrzeugreifen und Reparaturpflaster hohe Anforderungen im Hinblick auf eine sichere und dauerhafte Bindung an den Fahrzeugreifen gestellt.

Bei den bekannten Verfahren des Einbaus eines Reparaturpflasters in einen Fahrzeugreifen sind zwei Komponenten erforderlich, um eine dauerhafte Verbindung von Reparaturpflaster und Fahrzeugreifen zu gewährleisten, nämlich die sogenannte Verbindungsschicht des Reparaturpflasters und der Klebstoff.

Die Verbindungsschicht besteht üblicherweise aus mastiziertem Naturkautschuk und Harzen und enthält keine Beschleuniger.

Der Klebstoff besteht aus in Lösemittel gelöstem Naturkautschuk, Harzen und enthält die für die Reaktion, insbesondere für die Vulkanisation, erforderlichen Beschleuniger, ohne die eine Vulkanisation der Verbindung nicht erfolgen kann.

Bei den bekannten Reparaturverfahren von Fahrzeugreifen wird die Reparaturstelle vor dem Aufbringen des Reparaturpflasters gereinigt und aufgeraut um eine aktive Oberfläche mit hoher Struktur zu erzeugen. Im nächsten Schritt wird der Klebstoff auf die Reparaturstelle aufgebracht. Anschließend muss das Lösungsmittel des Klebstoffes ablüften. Danach wird das Reparaturpflaster auf die Reparaturstelle aufgelegt und angepresst. Je nach gewähltem Verfahren erfolgt die Vulkanisation dann drucklos bei Raumtemperatur oder durch Einwirkung von Druck und Temperatur mittels geeigneter Vorrichtungen (z.B. im Autoklav oder in einer Heizpresse). Nachteilig bei den Verfahren ist die erforderliche Zeit zum Ablüften des Lösungsmittels.

WO2009/061324 offenbart ein Reparaturpflaster zur Verwendung in einem bekannten Reparaturverfahren.

Zudem basieren die bekannten Klebstoffe auf organischen Lösemitteln, wodurch sie grundsätzlich eine Gefahr für die Umwelt und den Anwender darstellen können, so dass sogar derzeit in verschiedenen Ländern schon einige dieser Lösungsmittel zur Reparatur von Gegenständen aus Gummi nicht mehr verwendet werden dürfen. Des Weiteren ist das Ablüften des Lösungsmittels anspruchsvoll, da die Haftung des Reparaturpflasters stark von dem Ablüftgrad abhängt. Wenn der Klebstoff zu lange angetrocknet ist, wird keine ausreichende Haftung erreicht (Übertrocknung). Ist dagegen die Antrocknungs- bzw. Ablüftzeit zu kurz bemessen worden, ist noch zu viel Lösungsmittel auf der Reparaturstelle, so daß auch dann die Haftung des Reparaturpflasters nicht gewährleistet ist, da insbesondere bei einer Vulkanisation unter Temperatur das in der Reparaturstelle verbliebene Lösemittel zur Blasenbildung führt. Beim Einsatz entflammbarer Lösemittel sind zusätzlich entsprechende Maßnahmen zur Verhütung von Bränden, bspw. mittels Absaugung und Belüftung, zu treffen.

Es ist eine Aufgabe der vorliegenden Erfindung ein Reparaturpflaster zur Reparatur von elastomeren Bauteilen bereitzustellen, bei dem einerseits ohne Einsatz eines Klebstoffs eine ausreichend hohe Konfektionsklebrigkeit zur Fixierung des Reparaturpflasters vor der Vulkanisation mit dem elastomeren Bauteil erreicht wird, und andererseits die Festigkeit der Verbindung nach der Vulkanisation mindestens die Werte von herkömmlichen Verfahren erreicht oder übertrifft. Des Weiteren soll das Reparaturpflaster eine lange Lagerzeit ohne Verlust dieser ausreichend hohen Konfektionsklebrigkeit aufweisen.

Diese Aufgabe wird erfindungsgemäß durch die Merkmale des Anspruchs 1, sowie durch das Verfahren gemäß Anspruch 12 gelöst. Vorteilhafte Ausgestaltungen und bevorzugte Ausführungsbeispiele der Erfindung sind in den Unteransprüchen angegeben.

Mit den häufig als gleichwertig verwendeten Begriffen "Autohäsion", "Klebkraft", "Eigenklebrigkeit" oder "Konfektionsklebrigkeit" wird die Fähigkeit von zwei Oberflächen desselben Materials bezeichnet, bei Kontaktierung eine starke Bindung zu bilden, die der Trennung der Oberflächen entgegenwirkt. Für die quantitative Charakterisierung dieser Eigenschaft kann die zur Trennung notwendige Kraft angegeben werden, wobei die Trennbedingungen in Abhängigkeit von bruchmechanischen Kenntnissen und von einsatzspezifischen Kriterien definiert werden müssen.

Im Folgenden soll der Begriff der "Konfektionsklebrigkeit" jedoch nicht auf eine Verbindung von zwei Oberflächen desselben Materials beschränkt sein, sondern auch eine Verbindung von unterschiedlichen Materialien umfassen.

Bei zu geringer Konfektionsklebrigkeit ist nicht sichergestellt, dass das Reparaturpflaster nach dem Anbringen auf dem Fahrzeugreifen bis zum Abschluss des Vulkanisationsprozesses in der gewünschte Einbauposition verbleibt, und infolge dessen ist dann auch der Zusammenhalt der Verbindungsschicht des Reparaturpflasters mit der Reifeninnenwand nicht sichergestellt. Ist die Konfektionsklebrigkeit dagegen zu hoch, so kann das den Eintrag von unerwünschten Lufteinschlüssen fördern, wodurch es bei dem nachfolgenden Vulkanisationsprozeß zu einer verschlechterten Verschweißung der Verbindungsschicht mit dem Fahrzeugreifen kommen kann.

Die Konfektionsklebrigkeit sollte deshalb so eingestellt werden, dass beim Einbau des Reparaturpflasters eine gleichmäßige und vollflächige Anbindung an den Unterbau, d.h. bei schlaulosen Reifen an den Innerliner und bei Schlauchreifen an die gummierte Karkasse, sichergestellt ist.

Erfindungsgemäß wird ein Reparaturpflaster für ein elastomeres Bauteil, insbesondere für einen Fahrzeugreifen, bereitgestellt, das eine Deckschicht, eine Verbindungsschicht zur Auflage auf einer Wandung des elastomeren Bauteils, und zumindest eine zwischen der Verbindungsschicht und der Deckschicht angeordnete Zwischenschicht aufweist. Die Verbindungsschicht weist vor der Vulkanisation mit dem elastomeren Bauteil eine derartige Konfektionsklebrigkeit auf, dass eine Verbindung zwischen dem Reparaturpflaster und dem elastomeren Bauteil zumindest das Eigengewicht des Reparaturpflasters überträgt und die Verbindungsschicht nach der Vulkanisation mit dem elastomeren Bauteil einen Trennwert von mindestens 5 N/mm aufweist.

Die angegebenen Werte für die Trennkraft beziehen sich auf einen Referenzwerkstoff (des Prüfkörpers) auf Butylkautschukbasis. Bei vergleichenden Versuchen mit LKW-Reifen verschiedener Hersteller wurden je nach Fabrikat Trennwerte ermittelt, die im Vergleich zum Referenzwerkstoff um den Faktor 1 bis 3 höher liegen.

Dieser erfindungsgemäße Aufbau des Reparaturpflasters hat den Vorteil, dass damit der Klebstoffeinstrich entfällt und daraus resultierend keine Lösemitteldämpfe infolge des Ablüftens mehr freigesetzt werden. Deshalb ist auch keine Ablüftzeit mehr erforderlich, wodurch der Reparaturablauf beschleunigt wird. Zudem kann auf den vorstehend erwähnten Brandschutz und die Absaugung der Lösungsmitteldämpfe verzichtet werden.

Ein weiterer Vorteil des vorliegenden Reparaturpflasters besteht darin, dass die Verwendung eines Klebstoffs zum Erreichen der Konfektionsklebrigkeit, welche die Verbindung zwischen dem Reparaturpflaster und der Wandung vor der Vulkanisation der Verbindungsschicht realisiert und dabei das Reparaturpflaster an der Reparaturstelle am elastomeren Bauteil fixiert, entbehrlich ist. Das vorliegende Reparaturpflaster ist somit aufgrund seiner Konfektionsklebrigkeit nach dem Anbringen an dem elastomeren Bauteil bis zur Vulkanisation der Verbindungsschicht, insbesondere für die Verwendung bei der Vulkanisation der Reparatur eines Fahrzeugreifens in einem Autoklaven, in der Lage, seine gewünschte Einbauposition am Fahrzeugreifen auch während des Transports zum Autoklaven und bei der Ausrichtung des Fahrzeugreifens darin, beizubehalten.

Zusätzlich bietet das vorliegende Reparaturpflaster den Vorteil, dass es zum Zeitpunkt des Einbaus die notwendige Konfektionsklebrigkeit entwickelt bzw. aufweist, wodurch dessen Handling und Lagerfähigkeit verbessert werden.

Bei dem Prüfverfahren zur Bestimmung des zur Konfektionsklebrigkeit zugehörigen Trennwerts handelt es sich vorzugsweise um das Verfahren gemäß DIN EN 28510 bzw. ISO 8510. Vor der Bestimmung des Trennwerts kann das Reparaturpflaster entweder zunächst auf eine Vorwärmtemperatur erwärmt oder bei Raumtemperatur verwendet werden, und dieses wird dann an dem elastomeren Bauteil, bzw. einem Bauteilprüfkörper angebracht. Anschließend wird nach einer Stunde, während der das Prüfteil bei Raumtemperatur lagert, das Verfahren nach DIN EN 28510 bzw. ISO 8510 durchgeführt.

Vorzugsweise kann bei einem vorliegenden Reparaturpflaster die Konfektionsklebrigkeit der Verbindungsschicht vor der Vulkanisation an das elastomere Bauteil mindestens 0,8 N/mm betragen.

Das vorliegende Reparaturpflaster zeigt insbesondere beim sogenannten Heißtrennwert (dazu wird der Prüfkörper vor der Prüfung auf 90°C erwärmt) höhere Werte als ein herkömmliches. d.h. unter Verwendung von Klebstoff befestigtes, Reparaturpflaster. Eine Ursache für dieses Verhalten liegt unter anderem darin, dass durch die nicht vorhandene Klebstoffschicht eine bessere Verbindung zwischen dem elastomeren Bauteil und der Verbindungsschicht des Reparaturpflasters erreicht wird. Die im Klebstoff enthaltenen Feststoffe, insbesondere die für die Konfektionsklebrigkeit zugesetzten Harze, scheinen speziell bei höheren Temperaturen durch das materialbedingte Erweichungsverhalten der Harze einen Abfall der Trennwerte zu verursachen.

Weiterhin kann bei einem Reparaturpflaster die Konfektionsklebrigkeit der Verbindungsschicht vor deren Vulkanisation mit dem elastomeren Bauteil über die Wahl einer Vorwärmtemperatur, die mindestens Raumtemperatur beträgt und unterhalb der Vulkanisationstemperatur der Verbindungsschicht liegt, einstellbar sein.

Vorzugsweise kann bei einem Reparaturpflaster die Verbindungsschicht derart ausgebildet sein, dass vor der Vulkanisation in einem ersten Temperaturintervall ein Trennwert von mindestens 1,0 N/mm erreichbar ist. Die Maximaltemperatur des ersten Temperaturintervalls ist vorzugweise kleiner als die Vulkanisationstemperatur der Verbindungsschicht.

In einer bevorzugten Variante des Reparaturpflasters kann die Verbindungsschicht derart ausgebildet sein, dass der Trennwert bzw. die Konfektionsklebrigkeit in dem Temperaturintervall sprungartig zunimmt, wobei das erste Temperaturintervall im Wesentlichen zwischen 60°C und 70°C und unterhalb der Vulkanisationstemperatur der Verbindungsschicht liegt. Das erste Temperaturintervall kann beispielsweise eine Temperaturdifferenz zwischen der Maximaltemperatur und der Minimaltemperatur von im Wesentlichen 10K umfassen. Weiterhin kann das vorbestimmte Temperaturintervall eine Temperaturdifferenz zwischen der Maximaltemperatur und der Minimaltemperatur von im Wesentlichen 5K umfassen.

Weiterhin kann in einem Reparaturpflaster die Verbindungsschicht derart ausgebildet sein, dass der Trennwert für Temperaturen, die größer als die Temperaturen des ersten Temperaturintervalls sind, im Wesentlichen konstant bleibt oder zunimmt.

Weiterhin kann bei einem vorliegenden Reparaturpflaster die Verbindungsschicht zwischen 20 und 70 % mastizierten Naturkautschuk enthalten. Weiterhin kann die Verbindungsschicht 2 bis 10% flüssigen Polyisoprenkautschuk enthalten. Des Weiteren kann die Verbindungsschicht 1 bis 10 % Harze, vorzugsweise Koresin-Harz, enthalten. Die Kombination dieser drei Komponenten hat sich hinsichtlich der temperaturabhängigen Konfektionsklebrigkeit als besonders vorteilhaft herausgestellt.

Vorzugsweise kann bei einem Reparaturpflaster der Anteil von mastiziertem Naturkautschuk an der Verbindungsschicht 35 bis 60% betragen. Weiterhin kann der Anteil von flüssigem Polyisoprenkautschuk an der Verbindungsschicht vorzugsweise 5 bis 7 % betragen. Des Weiteren kann der Anteil von Koresin-Harz an der Verbindungsschicht vorzugsweise 2 bis 4 % betragen. Die zu 100 % fehlenden Mischungsbestandteile setzen sich aus Füllstoffen (z.B. Ruß, Kieselsäure, Kreide), Reaktionsvermittlern (Schwefel, Verzögerer, Beschleunigern, Zinkoxid), Weichmachern, Verarbeitungshilfen (Stearinsäure) und Alterungsschutzmitteln zusammen.

Weiterhin kann bei einem Reparaturpflaster die Verbindungsschicht ein Beschleunigersystem enthalten, welches erst bei Temperaturen oberhalb von 90°C reagiert.

Vorzugsweise kann bei einem vorliegenden Reparaturpflaster das Beschleunigersystem der Verbindungsschicht mindestens 0,5 % eines Thiazol-Beschleunigers oder eines Beschleunigers aus der Gruppe der Sulfenamide, Carbamate oder Thiurame und mindestens 0,2 % eines Zweitbeschleunigers aus der Gruppe der Guanidine oder eines anderen aminischen Beschleunigers enthalten. Die Beschleuniger sind so gewählt, dass bei Umgebungstemperatur keine Reaktion erfolgt, die Lagerfähigkeit des Produktes somit sichergestellt wird. Der Thiazol-Beschleuniger bewirkt eine Vernetzungsreaktion, welche ab einer Temperaturen von 90°C einsetzt. Der Zweitbeschleuniger erhöht die Reaktionsgeschwindigkeit und reduziert damit die zur Vernetzung benötigte Zeit.

In einer bevorzugten Variante des Reparaturpflasters kann zumindest eine abziehbare Schutzfolie vorgesehen sein, welche die Verbindungsschicht bis zu deren Verwendung vor Verschmutzung schützt.

Weiterhin kann bei einem Reparaturpflaster die Zwischenschicht eine Vielzahl von im Wesentlichen strukturiert angeordneten faserförmigen Einlagen aufweisen.

Weiterhin umfasst die vorliegende Erfindung die Verwendung des Reparaturpflasters zur Reparatur eines beschädigten Fahrzeugreifens.

Ein Verfahren zum Verbinden eines Reparaturpflasters mit einem Fahrzeugreifen kann die Schritte des Bereitstellens eines elastomeren Bauteils, des Anbringens des Reparaturpflasters an dem elastomeren Bauteil, insbesondere an einer Reparaturstelle umfassen. Weiterhin kann das Verfahren den Schritt des Vulkanisierens des Reparaturpflasters an dem elastomeren Bauteil umfassen, wobei der Trennwert nach der Vulkanisation der Verbindungsschicht des Reparaturpflasters mit dem elastomeren Bauteil mindestens 5 N/mm beträgt.

Weiterhin kann das Verfahren den Schritt des Vorwärmens des Reparaturpflasters vor dem Anbringen an dem elastomeren Bauteil auf eine Vorwärmtemperatur, wobei diese unterhalb der Vulkanisationstemperatur der Verbindungsschicht des Reparaturpflasters liegt, umfassen.

Vorteilhafte Ausgestaltungen und weitere Details der vorliegenden Erfindung werden im Folgenden anhand verschiedener Ausführungsbeispiele mit Bezug auf schematische Figuren beschrieben.
Fig. 1 zeigt eine Seitenansicht eines Reparaturpflasters für Fahrzeugreifen gemäß der vorliegenden Erfindung,
Fig. 2 zeigt eine graphische Darstellung des Trennwerts von unterschiedlichen Reparaturpflastern in Abhängigkeit von der Vorwärmtemperatur,
Fig. 3 zeigt eine graphische Darstellung der Trennwerte von unterschiedlichen Reparaturpflastern in Abhängigkeit von der Prüftemperatur,
Fig. 4 zeigt in einer graphischen Darstellung die Abhängigkeit des Trennwerts eines Reparaturpflasters von dem Werkstoff des elastomeren Bauteils, und
Fig. 5 zeigt in einer graphischen Darstellung die Abhängigkeit des Trennwerts eines vorliegenden Reparaturpflasters von der Lagerzeit.

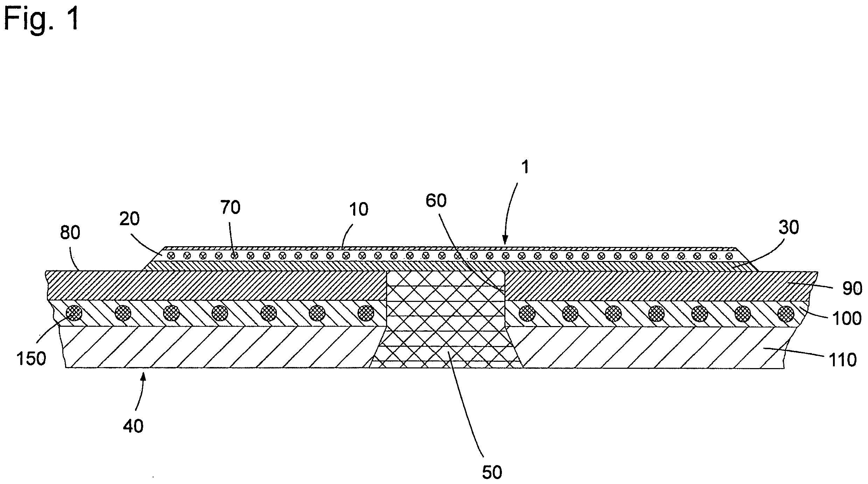

Bezugnehmend auf Fig. 1 ist schematisch ein Reparaturpflaster 10 für Fahrzeugreifen gemäß der vorliegenden Erfindung dargestellt. Auf der Oberseite des Reparaturpflasters 1 ist eine Deckschicht 10 ausgebildet, die keine Konfektionsklebrigkeit vor und nach der Reparatur aufweist. Angrenzend an die Deckschicht 10 ist eine Zwischenschicht 20 ausgebildet, welche eine Vielzahl von faserförmigen Einlagen 70 aufweist. Diese Einlagen 70 sind in der Regel über die Dicke der Zwischenschicht 20 in einer oder mehreren Schichten angeordnet, wobei jede einzelne Schicht eine strukturelle Anordnung der faserförmigen Einlagen aufweist. Die Orientierung der einzelnen Schichten in der Zwischenschicht 20 können gegen einander verschieden sein. Insbesondere bei größeren Schäden im Laufflächen- oder Seitenwandbereich dienen diese Einlagen 70 dazu, die im Schadensbereich unterbrochenen Festigkeitsträger zu überbrücken.

Auf der Unterseite des Reparaturpflasters 1 ist die Verbindungsschicht 30 ausgebildet, welche während und nach der Reparatur mit der Wandung 80 des Fahrzeugreifens in Kontakt steht. Weiterhin steht die Verbindungsschicht 30 vor und nach der Vulkanisation des Fahrzeugreifens mit einer Rohgummimasse 50 in Kontakt.

Im Rahmen der Reparatur des beschädigten Fahrzeugreifens wird die schadhafte Stelle des Fahrzeugreifens aufgeraut, so daß Staub und Schmutz entfernt werden und eine unbeschädigte Schicht der in dem Fahrzeugreifen enthaltenen Komponenten freigelegt wird, wobei eine im Wesentlichen konische Gestaltung für eine Reparaturstelle 60 im Fahrzeugreifen gebildet wird. Anschließend wird die Reparaturstelle 60 mit der Rohgummimasse 50 vor der Vulkanisation der Verbindungsschicht 30 gefüllt.

Auf die Reparaturstelle 60 wird anschließend das auf eine entsprechende Fügetemperatur vorgewärmte Reparaturpflaster 1 aufgelegt, wobei dessen Abmessungen so gewählt werden, dass die Reparaturstelle 60 von diesem vollständig überdeckt wird. Des Weiteren sollten die Abmessungen des Reparaturpflasters 1 derart gewählt werden, so dass die Reifenwandung 80 von der Verbindungsschicht 30 für eine stabile Verbindung ausreichend bedeckt wird.

Nach dem Anrollen des Reparaturpflasters erfolgt die Vulkanisation der Reparaturstelle und des Reparaturpflasters unter Druck und Temperatur mittels einer geeigneten Vorrichtung oder im Autoklaven.

Der Aufbau des Fahrzeugreifens ist hier beispielhaft für den Flankenbereich eines Radial-LKW-Reifens derart dargestellt, dass die Wandung 80 des Fahrzeugreifens durch den Innerliner 90 gebildet wird, wobei sich an diesen die Karkasse 100 anschließt, welche in Form einer Einlage den Kord 150 aufweist. Angrenzend an die Karkasse 100 befindet sich der Seitenwandgummi 110 des Fahrzeugreifens.

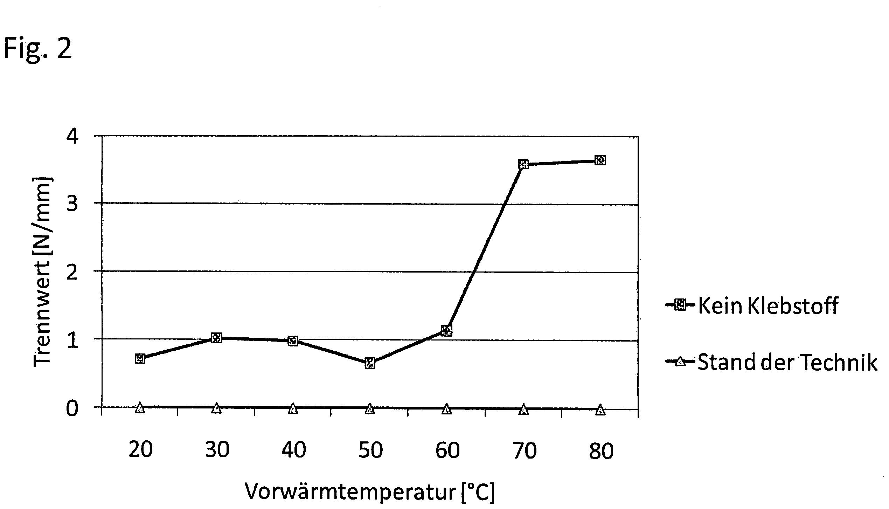

Fig. 2 zeigt einen Vergleich der gemessenen Trennwerte in Abhängigkeit von der Vorwärmtemperatur zwischen einem bekannten Reparaturpflaster gemäß dem Stand der Technik, das unter Verwendung eines Klebstoffs aufgebracht wurde, und einem vorliegenden Reparaturpflaster ohne die Verwendung eines Klebstoffs.

Die in Fig. 2 dargestellten Trennwerte wurde jeweils nach einer Stunde und der Abkühlung des Prüfkörpers auf Raumtemperatur gemäß dem standardisierten Prüfverfahren nach DIN EN 28510 bzw. ISO 8510 gemessen.

Bei Raumtemperatur weist die vorliegende Verbindungsschicht des Reparaturpflasters (dargestellt mittels quadratischen Symbolen) im Vergleich zu dem bekannten Reparaturpflaster (dargestellt mit dreieckigen Symbolen) bereits bei Raumtemperatur eine vorbestimmte Konfektionsklebrigkeit, und damit einen vorbestimmten Trennwert, auf, wobei das Handling des Reparaturpflasters beim Fixieren an der Einbaustelle noch nicht beeinträchtigt ist.

Bei einer Erwärmung der vorliegenden Verbindungsschicht vor dem Fixieren des Reparaturpflasters und dem Vulkanisieren der Verbindungsschicht zeigt sich im Bereich von 60°C bis 70°C ein sprunghafter Anstieg des gemessenen Trennwerts. Wird die Vorwärmtemperatur größer als 70°C gewählt, so zeigt sich gegenüber dem Trennwert bei 70°C noch eine leichte Zunahme desselben.

Die vorliegende Verbindungsschicht ermöglicht dabei eine sichere Haftung sowohl bei Schlauchreifen, d.h. auf dem Innerliner des Fahrzeugreifens, der vorwiegend aus Butylkautschuk besteht, als auch bei Schlauchreifen, d.h. auf der Reifenkarkasse.

Reparaturpflaster mit einer vorliegenden Verbindungsschicht sind vorzugsweise für die Heißvulkanisation einsetzbar. Prinzipiell ist aber auch eine Ausführungsform denkbar, bei der die Verbindungsschicht durch das Erwärmen aktiviert wird und in der Folge auch bei Raumtemperatur der Vulkanisationsprozess stattfinden kann.

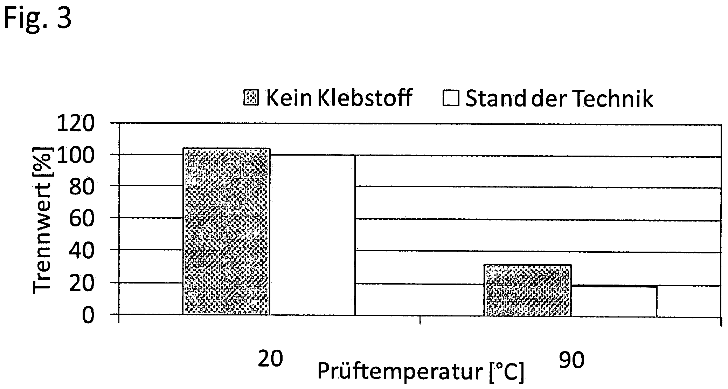

Fig. 3 zeigt eine graphische Darstellung der Trennwerte von unterschiedlichen Reparaturpflastern in Abhängigkeit von der Prüftemperatur. Hierbei wurde jeweils ein vorliegendes Reparaturpflaster mit einem bekannten Reparaturpflaster bei unterschiedlichen Prüftemperaturen zur Ermittlung des Trennwerts verglichen. So zeigte sich, dass der Trennwert bei 20°C des vorliegenden Reparaturpflasters gegenüber dem bekannten Reparaturpflaster um 4 Prozentpunkte erhöht ist, so dass eine verbesserte Festigkeit des vorliegenden Reparaturpflasters erzielt wurde. Eine signifikantere Zunahme der Festigkeit der Verbindung zwischen Reparaturpflaster und Prüfkörper zeigt sich bei einer Prüftemperatur von 90°C, bei der der Trennwert des vorliegenden Reparaturpflasters gegenüber bekannten Reparaturpflaster sogar um 13 Prozentpunkte erhöht ist.

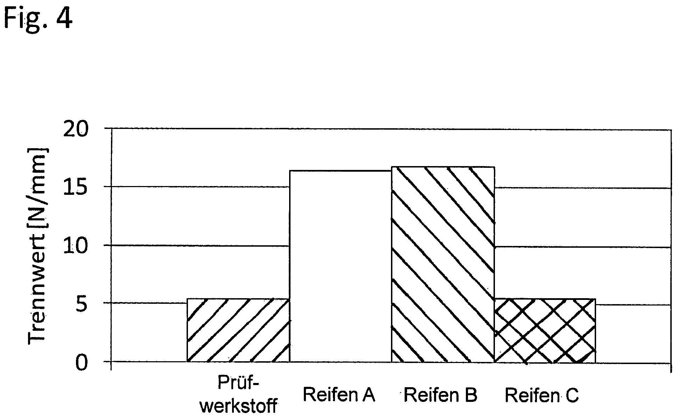

Fig. 4 zeigt in einer graphischen Darstellung die Abhängigkeit des Trennwerts eines Reparaturpflasters von dem Werkstoff des elastomeren Bauteils, hier eines Fahrzeugreifens. Die Balken der Figur stellen jeweils den Trennwert bei einer Prüftemperatur von 20°C dar, nachdem das Reparaturpflaster zuvor in einem Autoklaven an den Fahrzeugreifen bzw. an den Prüfwerkstoff vulkanisiert wurde.

Bei Verwendung eines Prüfwerkstoffs, d.h. einem Prüfkörper, dessen Gestaltung nicht einem Fahrzeugreifen, sondern einem im Wesentlichen rechteckigen flachen Prüfkörper entspricht, wurde ein Referenztrennwert von 5,4 N/mm gemessen. Wird dagegen das vorliegende Reparaturpflaster wie vorstehend beschrieben an den Reifen des Herstellers A bzw. des Herstellers B angebracht, so ergibt sich ein Trennwert von 14,6 N/mm bzw. 16,7 N/mm. Bei der Verbindung mit einem Fahrzeugreifen des Herstellers C ergab sich dagegen ein Trennwert von 5,5 N/mm.

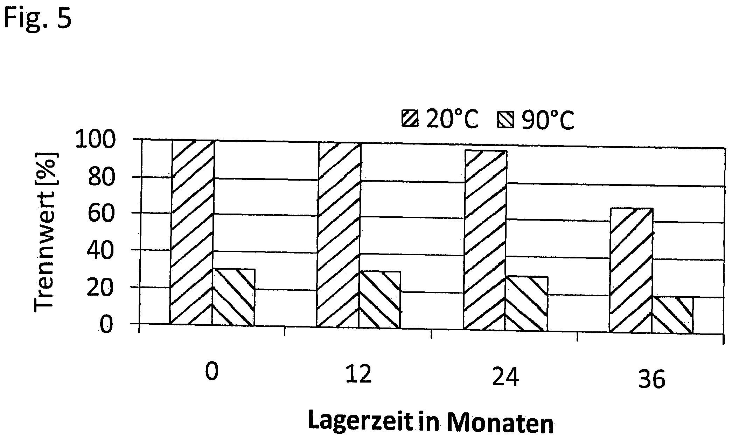

Fig. 5 zeigt in einer graphischen Darstellung die Abhängigkeit des Trennwerts eines vorliegenden Reparaturpflasters von der Lagerzeit. So zeigt sich bei einer Prüftemperatur, welcher der Raumtemperatur entspricht, mit zunehmender Lagerzeit eine Abnahme des Trennwerts, wobei für einen Zeitraum von 24 Monaten der Trennwert im Wesentlichen dem Referenztrennwert entspricht. Der Referenztrennwert bestimmt sich in diesem Beispiel aus dem Trennwert, der bei einer Verbindung eines vorliegenden Reparaturpflasters, welches auf den Prüfkörper von Fig. 4 aufgebracht wird, ohne Lagerzeit bei einer Prüftemperatur, welcher der Raumtemperatur entspricht, gemessen wird. Lediglich bei einer Lagerzeit, welche eine Zeitdauer von 24 Monate übertrifft, zeigt sich in diesem Beispiel eine Abnahme des Trennwerts auf ca. zwei Drittel des Ausgangswerts.

Ein qualitativ ähnlicher Verlauf zeigt sich bei einer Betrachtung des Trennwerts, bei dem der Prüfkörper zuvor auf 90°C erwärmt wurde, wobei hierbei der Referenzwert des vorliegenden Reparaturpflasters in diesem Beispiel bei ca. einem Drittel des entsprechenden Werts für eine Prüftemperatur bei Raumtemperatur liegt.

Die gezeigten Ausführungsbeispiele sind rein illustrativ und nicht beschränkend auszulegen. An ihnen können zahlreiche Änderungen vorgenommen werden, ohne den Schutzumfang der Ansprüche zu verlassen.

## Patentansprüche

1. Reparaturpflaster für ein elastomeres Bauteil, insbesondere für einen Fahrzeugreifen, mit:
- einer Deckschicht (10),
- einer Verbindungsschicht (30) zur Auflage auf einer Wandung (80) des elastomeren Bauteils (40),
- und zumindest einer zwischen der Verbindungsschicht (30) und der Deckschicht (10) angeordneten Zwischenschicht (20),
wobei
- die Verbindungsschicht (30) vor der Vulkanisation mit dem elastomeren Bauteil (40) eine derartige Konfektionsklebrigkeit aufweist, dass eine Verbindung zwischen dem Reparaturpflaster und dem elastomeren Bauteil (40) zumindest das Eigengewicht des Reparaturpflasters überträgt und
- die Verbindungsschicht (30) nach der Vulkanisation mit dem elastomeren Bauteil (40) einen Trennwert von mindestens 5 N/mm aufweist, wobei der Trennwert mittels eines Verfahrens gemäß DIN EN 28510 bzw. ISO 8510 bestimmt wird, wobei die Verbindungsschicht (30) mastizierten Naturkautschuk, flüssigen Polyisoprenkautschuk, sowie ein Harz enthält,
wobei der Anteil von mastiziertem Naturkautschuk an der Verbindungsschicht (30) mindestens 20 %, der Anteil von flüssigem Polyisoprenkautschuk an der Verbindungsschicht (30) mindestens 2 % sowie der Anteil von Koresin-Harz an der Verbindungsschicht (30) mindestens 1 % beträgt, oder
der Anteil von mastiziertem Naturkautschuk an der Verbindungsschicht (30) zwischen 20 und 70%, der Anteil von flüssigem Polyisoprenkautschuk an der Verbindungsschicht (30) zwischen 2 % und 10% sowie der Anteil von Harz an der Verbindungsschicht (30) zwischen 1 und 10 % beträgt.

2. Reparaturpflaster nach Anspruch 1, **dadurch gekennzeichnet, dass** die Konfektionsklebrigkeit der Verbindungsschicht (30) vor der Vulkanisation an das elastomere Bauteil (40) mindestens 1 N/mm beträgt.

3. Reparaturpflaster nach Anspruch 1 oder 2, **dadurch gekennzeichnet, dass** die Konfektionsklebrigkeit der Verbindungsschicht (30) vor deren Vulkanisation mit dem elastomeren Bauteil (40) über die Wahl einer Vorwärmtemperatur, die mindestens Raumtemperatur beträgt und unterhalb der Vulkanisationstemperatur der Verbindungsschicht (30) liegt, einstellbar ist.

4. Reparaturpflaster nach zumindest einem der Ansprüche 1-3, **dadurch gekennzeichnet, dass** die Verbindungsschicht (30) derart ausgebildet ist, dass vor der Vulkanisation in einem ersten Temperaturintervall ein Trennwert von mindestens 1 N/mm erreichbar ist.

5. Reparaturpflaster nach zumindest einem der Ansprüche 1-4, **dadurch gekennzeichnet, dass** die Verbindungsschicht (30) derart ausgebildet ist, dass der Trennwert in dem Temperaturintervall sprungartig zunimmt, wobei das erste Temperaturintervall im Wesentlichen zwischen 60°C und 70°C und unterhalb der Vulkanisationstemperatur der Verbindungsschicht (30) liegt.

6. Reparaturpflaster nach zumindest einem der Ansprüche 1-5, **dadurch gekennzeichnet, dass** die Verbindungsschicht (30) derart ausgebildet ist, dass der Trennwert für Temperaturen, die größer als die Temperaturen des ersten Temperaturintervalls sind, im Wesentlichen konstant bleibt oder zunimmt.

7. Reparaturpflaster nach zumindest einem der Ansprüche 1-6, **dadurch gekennzeichnet, dass** die Verbindungsschicht (30) ein Beschleunigersystem enthält, welches erst bei Temperaturen oberhalb von 90°C reagiert.

8. Reparaturpflaster nach zumindest einem der Ansprüche 1-7, **dadurch gekennzeichnet, dass** das Beschleunigersystem der Verbindungsschicht mindestens 0,5 % eines Thiazol-Beschleunigers und mindestens 0,2% eines Zweitbeschleunigers aus der Gruppe der Guanidine oder eines anderen aminischen Beschleunigers enthält.

9. Reparaturpflaster nach zumindest einem der Ansprüche 1-8, **dadurch gekennzeichnet, dass** zumindest eine abziehbare Schutzfolie vorgesehen ist, welche die Verbindungsschicht (30) bis zu deren Verwendung vor Verschmutzung schützt.

10. Reparaturpflaster nach zumindest einem der Ansprüche 1-9, **dadurch gekennzeichnet, dass** die Zwischenschicht (20) eine Vielzahl von im Wesentlichen strukturiert angeordneten faserförmigen Einlagen (70) aufweist.

11. Verwendung eines Reparaturpflasters nach zumindest einem der Ansprüche 1-10 zur Reparatur eines beschädigten Fahrzeugreifens.

12. Verfahren zum Verbinden eines Reparaturpflasters gemäß einem der Ansprüche 1-10, umfassend die Schritte:
- Bereitstellen eines elastomeren Bauteils (40),
- Anbringen des Reparaturpflasters an dem elastomeren Bauteil (40), insbesondere an einer Reparaturstelle,
- Vulkanisation des Reparaturpflasters an dem elastomeren Bauteil (40), wobei der Trennwert nach der Vulkanisation der Verbindungsschicht (30) des Reparaturpflasters mit dem elastomeren Bauteil (40) mindestens 5 N/mm beträgt.

13. Verfahren nach Anspruch 12, umfassend die Schritte:
- Vorwärmen des Reparaturpflasters vor dem Anbringen an das elastomere Bauteil (40) auf eine Vorwärmtemperatur, wobei diese unterhalb der Vulkanisationstemperatur der Verbindungsschicht (30) des Reparaturpflasters liegt.

## Claims

1. A repair patch for an elastomer component, in particular for a vehicle tire, comprising:
- a cover layer (10),
- a connecting layer (30) for contacting a wall (80) of said elastomer component (40),
- and at least one intermediate layer (20) arranged between said connecting layer (30) and said cover layer (10),
wherein
- said connecting layer (30) has before vulcanization with said elastomer component (40) has such a green tack that a connection between said repair patch and said elastomer component (40) supports at least said repair patch's own weight, and
- said connecting layer (30) has a separation value of at least 5 N/mm after vulcanization with said elastomer component (40), wherein said separation value is determined by means of a method according to DIN EN 28510 or ISO 8510, respectively,
wherein said connecting layer (30) contains masticated natural rubber, liquid polyisoprene rubber, as well as resin,
wherein the masticated natural rubber content of said connecting layer (30) is at least 20 %, the liquid polyisoprene rubber content of said connecting layer (30) is at least 2 %, and the Koresin resin content of said connecting layer is at least 1 %, or
the masticated natural rubber content of said connecting layer (30) is between 20 % and 70 %, the liquid polyisoprene rubber content of said connecting layer (30) is between 2 % and 10 %, and the resin content of said connecting layer (30) is at between 1 % and 10 %.

2. The repair patch according to claim 1, **characterized in that** the green tack of said connecting layer (30) is at least 1 N/mm before the vulcanization to said elastomer component (40).

3. The repair patch according to claim 1 or 2, **characterized in that** the green tack of said connecting layer (30) can be adjusted before the vulcanization with said elastomer component (40) via the selection of a preheating temperature which is at least room temperature and is below the vulcanization temperature of said connecting layer (30).

4. The repair patch according to at least one of claims 1-3, **characterized in that** said connecting layer (30) is formed such that a separation value of at least 1 N/mm can be achieved in a first temperature interval before vulcanization.

5. The repair patch according to at least one of claims 1-4, **characterized in that** said connecting layer (30) is formed such that the separation value abruptly increases in said first temperature interval, the first temperature interval being substantially between 60 °C and 70 °C and below the vulcanization temperature of said connecting layer (30).

6. The repair patch according to at least one of claims 1-5, **characterized in that** said connecting layer (30) is formed such that the separation value remains substantially constant or increases for temperatures higher than the temperatures of the first temperature interval.

7. The repair patch according to at least one of claims 1-6, **characterized in that** said connecting layer (30) is formed such that said connecting layer (30) contains an accelerator system that reacts only at temperatures above 90 °C.

8. The repair patch according to at least one of claims 1-7, **characterized in that** the accelerator system of said connecting layer (30) contains at least 0,5 % of a thiazole accelerator and at least 0,2 % of a secondary accelerator from the group of guanidines or any other aminic accelerator.

9. The repair patch according to at least one of claims 1-8, **characterized in that** at least one peelable protective film is provided that protects said connecting layer (30) from contamination until it is used.

10. The repair patch according to at least one of claims 1-9, **characterized in that** said intermediate layer (20) has a plurality of filamentary inserts (70) substantially arranged in a structured manner.

11. Use of a repair patch according to at least one of claims 1-10 for repairing a damaged vehicle tire.

12. A method for connecting a repair patch according to one of claims 1-10, comprising the steps of:
providing an elastomer component (40),
- attaching said repair patch to said elastomer component (40), in particular at a repair spot, and
- vulcanizing said repair patch on said elastomer component (40), the separation value being at least 5 N/mm after the vulcanization of said connecting layer (30) of said repair patch with said elastomer component (40).

13. The method according to claim 12, comprising the steps of:
- preheating said repair patch to a preheating temperature before attaching it to said elastomer component (40), the preheating temperature being below the vulcanization temperature of said connecting layer (30) of said repair patch.

## Revendications

1. Emplâtre de réparation pour un composant élastomère, en particulier pour un pneumatique de véhicule, comportant :
- une couche de couverture (10),
- une couche de liaison (30) destinée à être appliquée sur une paroi (80) du composant élastomère (40),
- et au moins une couche intermédiaire (20) agencée entre la couche de liaison (30) et la couche de couverture (10),
dans lequel
- avant la vulcanisation avec le composant élastomère (40), la couche de liaison (30) présente une adhésivité de confection telle qu'une liaison entre l'emplâtre de réparation et le composant élastomère (40) transmet au moins le poids propre de l'emplâtre de réparation, et
- après la vulcanisation avec le composant élastomère (40), la couche de liaison (30) présente une valeur de séparation d'au moins 5 N/mm, la valeur de séparation étant déterminée par un procédé selon la norme DIN EN 28510 ou ISO 8510,
la couche de liaison (30) contient du caoutchouc naturel mastiqué, du caoutchouc de polyisoprène liquide ainsi qu'une résine,
la part de caoutchouc naturel mastiqué dans la couche de liaison (30) étant d'au moins 20 %, la part de caoutchouc de polyisoprène liquide dans la couche de liaison (30) étant d'au moins 2 %, et la part de résine de Koresin dans la couche de liaison (30) étant d'au moins 1 %, ou
la part de caoutchouc naturel mastiqué dans la couche de liaison (30) étant comprise entre 20 et 70 %, la part de caoutchouc de polyisoprène liquide dans la couche de liaison (30) étant comprise entre 2 % et 10 %, et la part de résine dans la couche de liaison (30) étant comprise entre 1 et 10 %.

2. Emplâtre de réparation selon la revendication 1,
**caractérisé en ce que**
avant la vulcanisation sur le composant élastomère (40), l'adhésivité de confection de la couche de liaison (30) est d'au moins 1 N/mm.

3. Emplâtre de réparation selon la revendication 1 ou 2,
**caractérisé en ce que**
avant sa vulcanisation avec le composant élastomère (40), l'adhésivité de confection de la couche de liaison (30) est réglable par le choix d'une température de préchauffage qui est au moins de la température ambiante et inférieure à la température de vulcanisation de la couche de liaison (30).

4. Emplâtre de réparation selon l'une au moins des revendications 1 à 3,
**caractérisé en ce que**
la couche de liaison (30) est réalisée de telle sorte que dans un premier intervalle de température, une valeur de séparation d'au moins 1 N/mm peut être atteinte avant la vulcanisation.

5. Emplâtre de réparation selon l'une au moins des revendications 1 à 4,
**caractérisé en ce que**
la couche de liaison (30) est réalisée de telle sorte que dans un premier intervalle de température, la valeur de séparation augmente par saut, le premier intervalle de température étant compris sensiblement entre 60 °C et 70 °C et étant inférieur à la température de vulcanisation de la couche de liaison (30).

6. Emplâtre de réparation selon l'une au moins des revendications 1 à 5,
**caractérisé en ce que**
la couche de liaison (30) est réalisée de telle sorte que pour des températures supérieures aux températures du premier intervalle de température, la valeur de séparation reste sensiblement constante ou augmente.

7. Emplâtre de réparation selon l'une au moins des revendications 1 à 6,
**caractérisé en ce que**
la couche de liaison (30) comprend un système accélérateur qui réagit uniquement à des températures supérieures à 90 °C.

8. Emplâtre de réparation selon l'une au moins des revendications 1 à 7,
**caractérisé en ce que**
le système accélérateur de la couche de liaison contient au moins 0,5 % d'un accélérateur à base de thiazole et au moins 0,2 % d'un second accélérateur parmi le groupe des guanidines ou d'un autre accélérateur aminé.

9. Emplâtre de réparation selon l'une au moins des revendications 1 à 8,
**caractérisé en ce que**
il est prévu au moins une feuille de protection retirable qui protège la couche de liaison (30) contre l'encrassement, jusqu'à son utilisation.

10. Emplâtre de réparation selon l'une au moins des revendications 1 à 9,
**caractérisé en ce que**
la couche intermédiaire (20) comprend une multitude d'inserts fibreux (70) agencés sensiblement de façon structurée.

11. Utilisation d'un emplâtre de réparation selon l'une au moins des revendications 1 à 10 pour la réparation d'un pneumatique endommagé de véhicule.

12. Procédé de liaison d'un emplâtre de réparation selon l'une des revendications 1 à 10, comprenant les étapes consistant à :
- fournir un composant élastomère (40),
- appliquer l'emplâtre de réparation sur le composant élastomère (40), en particulier sur un emplacement à réparer,
- vulcaniser l'emplâtre de réparation sur le composant élastomère (40), la valeur de séparation étant d'au moins 5 N/mm après la vulcanisation de la couche de liaison (30) de l'emplâtre de réparation avec le composant élastomère (40).

13. Procédé selon la revendication 12, comprenant les étapes consistant à :
- préchauffer à une température de préchauffage l'emplâtre de réparation avant de l'appliquer sur le composant élastomère (40), ladite température de préchauffage étant inférieure à la température de vulcanisation de la couche de liaison (30) de l'emplâtre de réparation.
